# FASCICULE DE BREVET EUROPEEN

(11) **EP 0 818 036 B1**
(45) Date de publication et mention de la délivrance du brevet: **26.04.2000**
(21) Numéro de dépôt: 97901671.4
(22) Date de dépôt: 24.01.1997
(51) Int. Cl.: G10L 15/20

(54) **PROCEDE DE RECONNAISSANCE VOCALE EN AMBIANCE SEVERE, ET DISPOSITIF DE MISE EN OEUVRE**
SPRACHERKENNUNG IN GERÄUSCHVOLLER UMGEBUNG UND VORRICHTUNG ZUR DURCHFÜHRUNG DES VERFAHRENS
METHOD FOR VOICE RECOGNITION IN HARSH ENVIRONMENTS, AND DEVICE THEREFOR

(30) Priorité: 26.01.1996 FR 9600934
(43) Date de publication de la demande: 14.01.1998
(73) Titulaire: THOMSON-CSF SEXTANT, 78141 Vélizy Villacoublay (FR)
(72) Inventeur: GULLI, Christian, Thomson-CSF S.C.P.I., F-94117 Arcueil (FR); PASTOR, Dominique, Thomson-CSF S.C.P.I., F-94117 Arcueil Cédex (FR); RAYNAUD, Gérard, Thomson-CSF S.C.P.I., F-94117 Arcueil Cédex (FR)
(74) Mandataire: Chaverneff, Vladimir
(86) Numéro de dépôt international: FR9700147
(87) Numéro de publication internationale: WO9727577

(56) Documents cités:
- EP-A- 0 238 695
- EP-A- 0 592 280
- IEICE TRANSACTIONS ON FUNDAMENTALS OF ELECTRONICS, COMMUNICATIONS AND COMPUTER SCIENCES, vol. 76A, no. 8, 1 Août 1993, pages 1300-1307, XP000398862 TOSHIO KANNO ET AL: "GENERALIZED CEPSTAL MODELING OF DEGRADED SPEECH AND ITS APPLICATION TO SPEECH ENHANCEMENT"
- PROCEEDINGS ICASSP 87, IEEE ACOUSTICS, SPEECH, AND SIGNAL SOCIETY, vol. 1, 1987, DALLAS (US), 6-9 AVRIL 1987 , pages 305 -307, XP002016844 A.A. WRENCH, C.F.N. COWAN: "A NEW APPROACH TO NOISE-ROBUST LPC"

## Description

La présente invention se rapporte à un procédé de reconnaissance vocale et à un système de commande vocale en ambiance "sévère", c'est-à-dire fortement perturbée non seulement par le bruit, mais par différents facteurs physiques et physiologiques pouvant agir sur l'utilisateur.

Dans une ambiance sévère comme par exemple celle régnant dans un poste de pilotage d'un avion militaire, les appareils de prise, de restitution et de traitement de la voix ne sont pas optimisés, et sont même, pour la plupart, mal mis en oeuvre. Les communications radio entre l'équipage et leurs interlocuteurs sont de mauvaise qualité. Les utilisateurs communiquent avec plusieurs interlocuteurs (autres avions, stations au sol, les autres membres de l'équipage, leur propre voix leur revient). Ces communications sont monophoniques, parasitées, peu intelligibles et ne sont pas hiérarchisées. En outre, différents facteurs physiques et physiologiques peuvent perturber les capacités de l'utilisateur. Parmi ces facteurs, on notera en particulier le facteur de charge de l'avion, le masque à oxygène, la surpression respiratoire, le stress du pilote. Ces mauvaises communications, ajoutées au bruit ambiant, contribuent significativement à la fatigue des équipages, et peuvent même altérer leur santé. Les casques qu'ils portent les protègent peu ou mal de ces bruits. Les seuls moyens dont ils disposent pour essayer de rendre un peu plus intelligibles ces communications sont des commandes de réglage de niveau sonore, ce qui est loin d'être satisfaisant. Les divers appareils mettant en oeuvre ces communications sonores sont hétérogènes et leurs caractéristiques ne sont pas toujours complètement compatibles. En outre, la complexité croissante des systèmes embarqués entraîne une surcharge de travail pour l'opérateur provoquant stress, perte de concentration et à terme d'efficacité particulièrement néfaste à la poursuite d'une mission dans les meilleures conditions. Dans ce contexte, un dispositif de commande vocale à taux de reconnaissance élevé est particulièrement bénéfique car il permet de contrôler de façon relativement directe et naturelle un système complexe sans mobiliser toute l'attention de l'opérateur, ce qui est loin d'être le cas si l'on utilise des surfaces tactiles, des claviers, des boutons multi-positions.

Il est connu du brevet EP-A-0 238 695 un système de reconnaissance vocale qui comporte un étage de reconnaissance grossière suivi d'un étage de reconnaissance détaillée.

La présente invention a pour objet un système de commande vocale, en particulier pour une ambiance bruitée, capable d'atteindre un taux de reconnaissance élevé (95 % typiquement) avec un vocabulaire de l'ordre de quelques centaines de mots, et des phrases pouvant comporter 10 mots et plus.

Le procédé de l'invention est caractérisé par le fait qu'il consiste à effectuer une reconnaissance grossière, puis après comparaison avec des références acoustiques mémorisées, à fournir les N meilleures phrases reconnues, à choisir parmi ces N meilleures phrases, en les comparant à des modèles de dialogues probables et en effectuant parallèlement à la paramétrisation-reconnaissance grossière du signal un décodage acoustico-phonétique, la phrase la plus vraisemblable.

Le système de reconnaissance vocale conforme à l'invention comporte un dispositif d'acquisition relié à un dispositif de décodage acoustico-phonétique, lui-même relié à un dispositif de supervision de reconnaissance, ainsi qu'à un dispositif de reconnaissance vocale qui est lui-même relié à un dictionnaire, au superviseur de reconnaissance et à un dispositif de reconnaissance de syntaxe, ce dernier étant relié à un dispositif de mémorisation de dialogues, qui est relié au superviseur.

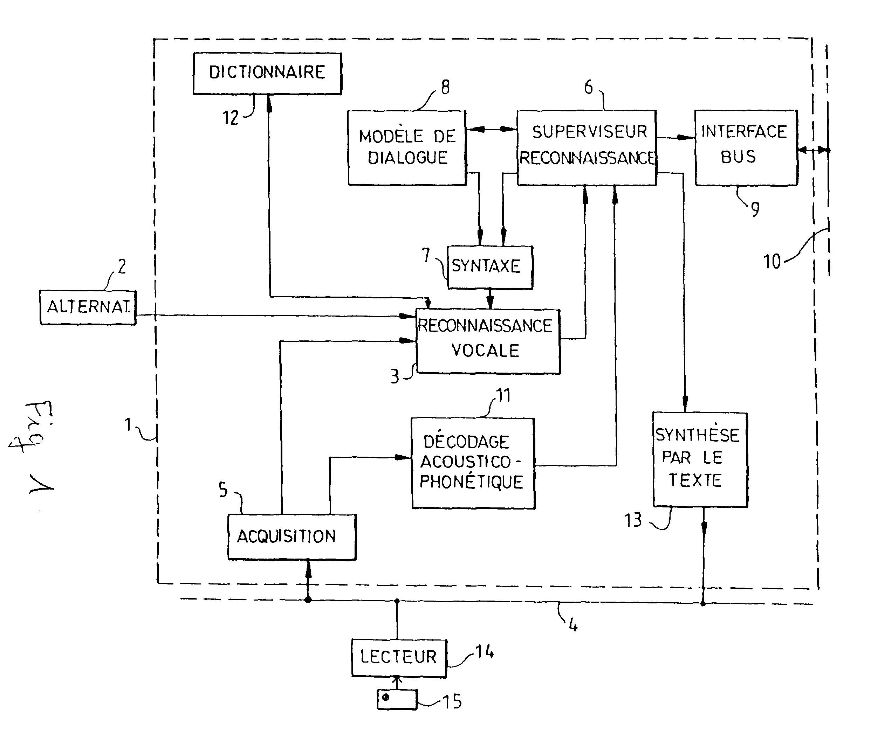

La présente invention sera mieux comprise à la lecture de la description détaillée d'un mode de réalisation, pris à titre d'exemple non limitatif et illustré par le dessin annexé sur lequel :
- la figure unique est un bloc-diagramme d'un système de commande vocale conforme à l'invention.

L'invention est décrite ci-dessous en référence à un système audiophonique d'avion, en particulier d'avion de combat, mais il est bien entendu qu'elle n'est pas limitée à une telle application, et qu'elle peut être mise en oeuvre aussi bien dans d'autres types de véhicules (terrestres ou maritimes) que dans des installations fixes, en particulier dans un environnement fortement bruité, comme par exemple dans des usines métallurgiques. L'utilisateur de ce système est, dans le cas présent, le pilote d'un avion de combat, mais il est bien entendu qu'il peut y avoir simultanément plusieurs utilisateurs, en particulier s'il s'agit d'un avion de transport civil, des dispositifs particuliers à chaque utilisateur étant prévus en nombre correspondant.

Le système 1 de reconnaissance vocale est commandé par un bouton-poussoir 2 également désigné par le terme "bouton d'alternat de commande vocale". Ce bouton 2 est nécessaire pour distinguer les signaux de communication (intercommunications de bord, communications radio) des ordres vocaux émis par l'utilisateur. L'appui sur cet alternat déclenche les processus algorithmiques du dispositif de reconnaissance vocale 3. Ce dispositif 3 reçoit en permanence les trames d'échantillons microphoniques (en provenance d'un circuit microphonique, non représenté, via un conducteur 4 qui peut être un bus) et les range dans une zone tampon d'une mémoire 5 (pouvant mémoriser par exemple 150 ms de parole) afin que ce circuit puisse rechercher un début d'élocution antérieur à l'appui sur le bouton 2.

Le dispositif 3 est relié à un dispositif 6 superviseur de reconnaissance et via un dispositif 7 de reconnaissance de syntaxe à un dispositif 8 de mémorisation et de contrôle de modèles de dialogues, lui-même relié au dispositif 6. Le dispositif 6 est relié via une interface 9 et via un bus 10 à un processeur de gestion, non représenté. Le dispositif 1 comporte également un dispositif 11 de décodage acoustico-phonétique reliant la mémoire 5 au superviseur 6, un dictionnaire de références acoustiques 12 relié au dispositif 3, et un dispositif 13 de synthèse par le texte reliant le superviseur 6 au bus 4. Le dictionnaire 12 est relié, via le bus 4, à une interface 14 qui coopère avantageusement avec une carte à mémoire 15 de personnalisation, dans laquelle on mémorise les paramètres relatifs au locuteur possédant cette carte, afin d'optimiser les références acoustiques du dictionnaire 12. Bien entendu, le lecteur de cartes et les cartes peuvent être remplacés par tout dispositif équivalent (ROM enfichable, téléchargement, ...).

Le dispositif 3 fournit au circuit superviseur 6 la ou les phrases reconnue (s) à partir des échantillons qu'il reçoit de la mémoire 5. Le dispositif 3 comporte, de façon classique, trois parties: acquisition, paramétrisation et reconnaissance de formes. L'acquisition du signal vocal provenant du bus 4 se fait avantageusement à une fréquence d'échantillonnage de 12 kHz, pour une largeur de mots de 16 bits.

La paramétrisation réalise une caractérisation-compression du signal vocal : à partir d'une trame de 256 échantillons 16 bits, 8 coefficients cepstraux 8 bits sont fournis. Cette phase est avantageusement complétée et améliorée en ambiance bruitée par des procédés de détection d'activité et de débruitage. La détection permet de cerner précisément le début et la fin de parole effectifs afin de s'affranchir des problèmes de synchronisation entre élocution et appui-relâcher de l'alternat. L'algorithmie est fondée sur la détection de voisement (recherche de structures harmoniques) et de sons non voisés (dits fricatifs par abus de langage) et enrichie d'une phase d'expertise permettant de définir la structure de l'élocution : noyau vocalique et blocs fricatifs précédant ou suivant ce noyau. Le débruitage intervient à deux niveaux : dans la phase de détection, sous forme d'un filtrage réjection (blanchiment) pour accroître l'acuité de la détection, dans la chaîne de paramétrisation "classique", sous forme d'un filtrage fréquentiel (filtrage de WIENER par exemple) pour augmenter la qualité de la paramétrisation en ambiance sévère. Le débruitage utilise une double modélisation du bruit : modélisation autorégressive par filtrage adaptatif ou prédiction linéaire, estimation du moment d'ordre 2 du spectre moyen de bruit pour le filtrage fréquentiel. La recherche des trames de bruit doit être, autant que possible, locale à l'élocution afin de conserver en première approximation l'hypothèse de stationnarité du bruit. L'utilisation du bouton 2, quel que soit le mode de conversation choisi autorise la mise en oeuvre d'une algorithmie de sélection des trames de bruit compatible avec reconnaissance vocale et débruitage microphone.

La reconnaissance de formes effectue la comparaison dynamique (calcul de distance) entre les spectres issus de la paramétrisation et les spectres de "référence" créés par l'opérateur lors de la phase d'apprentissage et chargés en mémoire avant le vol (reconnaissance vocale monolocuteur). En fonction des résultats de ces calculs, on peut retenir non pas une solution unique (la "meilleure" phrase reconnue au sens de l'algorithme de reconnaissance de formes) mais plusieurs qui seront triées par le module superviseur de reconnaissance. En outre, la syntaxe utilisée pour bâtir le langage de commande vocale peut être constituée de sous-syntaxes imbriquées dont l'arborescence est moins complexe : dans des conditions dégradées, la fonctionnalité "commande vocale" peut être ainsi maintenue avec des performances de reconnaissance élevées en éliminant les erreurs dues à un facteur de branchement trop important. Le pilote peut ainsi choisir une syntaxe de travail en fonction du type et de l'évolution de sa mission, ce changement de syntaxe peut se faire également de manière automatique en fonction de l'état des capteurs reliés au superviseur (centrale inertielle, sonde d'incidence...) lors d'évolutions sous facteur de charge, par exemple.

Le dispositif 8 a pour rôle de tenir compte du "contexte opérationnel" de la commande prononcée et des interactions pilote-machine (ordres récemment donnés, configuration de l'avion, scénario de la mission dans le cas d'un avion militaire, ...) pour pondérer de façon déterministe les arcs de syntaxe entre les mots. Cette pondération prend en compte différents facteurs tels que : la configuration du système de navigation et d'armes de l'avion, l'état de capteurs physiques de l'avion (centrale inertielle, facteur de charge...), l'historique du dialogue, le contenu du dictionnaire 12, la modélisation des dialogues et de la tâche, le décodage acoustico-phonétique qui opère une première réjection en fonction de critères phonétiques, les différentes phases reconnues,... Ces opérations sont contrôlées par le superviseur 6. Ainsi, l'invention permet d'optimiser la reconnaissance vocale dans l'ambiance "sévère" telle que définie ci-dessus. Ainsi, ce circuit effectue un traitement dynamique "intelligent" du contexte pour lever des ambiguïtés de reconnaissance, en favorisant ou en pénalisant certaines élocutions par rapport à d'autres (par exemple, il évite de sélectionner des fréquences déterminées sous facteur de charge, c'est-à-dire lorsque le pilote n'a pas son élocution habituelle.

Le décodage acoustico-phonétique est effectué parallèlement à la paramétrisation-reconnaissance classique du signal. L'objectif est de déterminer les composantes phonétiques du signal vocal et d'attribuer à chaque segment de signal la signature d'un phonème ou tout au moins, dans un premier temps, la signature d'une classe de phonèmes : radar contient [r] [a] [d] [a] [r] (liquide voisée, voisée, explosive voisée, voisée, liquide voisée). Une information supplémentaire est fournie au superviseur qui pourra ainsi pénaliser certaines phrases identifiées comme semblables du point de vue calcul de distance mais phonétiquement incompatibles ("auto" et "stop" par exemple).

Le dispositif superviseur 6 est chargé de fournir la commande validée à l'interface 9. Cette commande doit être la meilleure phrase reconnue, la reconnaissance tenant compte des informations issues de capteurs avions (centrale inertielle, capteurs de facteur de charge, capteur d'incidence, ...), du modèle de dialogue (8) et du décodage acoustico-phonétique (11).

Le dispositif 13 de synthèse par le texte génère par synthèse vocale la commande reconnue pour l'envoyer, via le bus 4, au circuit de retour d'écoute du pilote. De façon avantageuse, ce circuit n'utilise pas des mots numérisés et rangés en mémoire qui seraient restitués à la demande, mais au contraire recrée les composantes acoustico-phonétiques de l'élocution reconnue à partir de sa formulation orthographique.

En résumé, les rôles des différents dispositifs de reconnaissance du système 1 sont les suivants : le dispositif 3 effectue par un procédé connu en soi (par exemple par paramétrisation du signal et reconnaissance de formes), à partir d'une élocution, mémorisée en 5, une reconnaissance grossière, puis, fournit les N meilleures phrases reconnues appartenant à une syntaxe donnée (vérifiée en 7) après comparaison avec des références acoustiques mémorisées en 12.

Le dispositif 11 de décodage acoustico-phonétique procède à une analyse de type connu en soi (par exemple en mettant en oeuvre un banc de filtres et en recherchant des traits phonétiques caractéristiques, et fournit ensuite la structure phonétique, plus ou moins détaillée, des mots venant d'être prononcés. Cette détection de structure phonétique peut par exemple consister simplement à distinguer les zones voisées des zones non voisées.

Le dispositif 8 permet d'actualiser la base syntaxique sur laquelle se fait la recherche de la phrase reconnue, c'est à dire de restreindre ou d'élargir cette base. Cette actualisation se fait en fonction de l'un au moins des paramètres suivants : paramètres du mobile porteur (incidence, facteur de charge, ... si ce mobile est un avion), type et phase de la mission en cours (s'il s'agit d'un avion de combat : croisière, attaque, décollage, approche,...), historique des commandes vocales précédemment exécutées (donc ayant été reconnues avec succès), et éventuellement structure phonétique de l'élocution suivant les possibilités du dispositif 11. De façon avantageuse, ce dispositif 8 est capable d'autoriser la reprise des ordres vocaux sans répétition complète de la commande, par suite d'une erreur de reconnaissance ou d'une erreur imputable à l'opérateur (par exemple, si la phrase reconnue est : "affiche page moteur sur visualisation gauche", l'opérateur peut corriger de la façon suivante : "non, page radar" ou "non, à droite").

Le dispositif 6 est chargé de prendre la décision sur LA phrase (qui deviendra une commande vocale) reconnue à partir des informations fournies par les dispositifs 3, 11 et 8. Ce dispositif 6 code la phrase reconnue en une suite de symboles compréhensibles par les dispositifs 9 et 13. Le dispositif d'interface 9 se charge de transmettre à l'équipement concerné par la commande vocale émise l'ordre correspondant. Le dispositif 13 est avantageusement chargé de restituer vocalement un compte rendu de l'action correspondant à la commande si, par exemple, il n'y a pas de contrôle visuel associé à l'action à exécuter. De plus, le dispositif 6 informe le dispositif 8 de la décision prise, pour la mise à jour de l'historique des commandes émises.

La reconnaissance vocale effectuée par les dispositifs décrits ci-dessus peut, par exemple se dérouler comme suit : l'opérateur appuie sur l'alternat 2, prononce une phrase, qui est acquise (mémorisée) en 5. Le signal résultant est traité et reconnu en 3 et 11. Les résultats de l'analyse sont transmis au superviseur 6. Les N meilleures phrases (les plus ressemblantes au résultat de la reconnaissance par le dispositif 3) sont choisies par 7. Le dispositif 6 prend une décision à partir de ces N meilleures phrase à l'aide des informations de structure phonétique (voisement, frications) fournies par 11. Le superviseur 6 met à jour l'historique des commandes en complétant le contenu de 8. Ce dernier effectue également une pondération de la syntaxe active : par exemple dans le cas d'une sélection de stations radio, les commandes correspondantes seront privilégiées lors de l'élocution des prochaines commandes. L'ordre choisi par le superviseur 6 est, dans le cas présent, transmis à l'interface 9, et non au dispositif 13, car le résultat peut être contrôlé visuellement (affichage du canal radio choisi par exemple).

## Revendications

1. Procédé de reconnaissance vocale en ambiance sévère, caractérisé par le fait qu'il consiste à effectuer une reconnaissance grossière, puis après comparaison avec des références acoustiques mémorisées, à fournir les N meilleures phrases reconnues, à choisir parmi ces N meilleures phrases, en les comparant à des modèles de dialogues probables et en effectuant parallèlement à la paramétrisation-reconnaissance grossière du signal un décodage acoustico-phonétique, la phrase la plus vraisemblable.

2. Procédé selon la revendication 1, caractérisé en ce que les modèles de dialogue sont sélectionnés en fonction du contexte opérationnel de la reconnaissance.

3. Procédé selon la revendication 2, caractérisé en ce que les modèles de dialogue sont sélectionnés par pondération des arcs de syntaxe entre les mots, la pondération prenant en compte, outre le bruit ambiant, l'un au moins des facteurs suivants : l'état de capteurs de grandeurs physiques relatives aux conditions environnantes, l'historique des dialogues, le contenu d'un dictionnaire de références acoustiques, la modélisation du dialogue et de la tâche à laquelle se rapportent les dialogues, le décodage acoustico-phonétique qui opère une première réjection en fonction de critères phonétiques, les différentes phrases déjà reconnues.

4. Procédé selon la revendication 3, appliqué à un avion d'armes, caractérisé en ce que les grandeurs physiques relatives aux conditions environnantes comprennent les caractéristiques du système de navigation et d'armes de l'avion, et l'état de capteurs de l'avion tels que sa centrale inertielle et son facteur de charge.

5. Système de commande vocale en ambiance sévère, caractérisé en ce qu'il est arrangé pour la mise en oeuvre du procédé selon la revendication 1 et comporte a cet effet un dispositif d'acquisition (5) relié à un dispositif de décodage acoustico-phonétique (11), lui-même relié à un dispositif de supervision de reconnaissance (6), ainsi qu'à un dispositif de reconnaissance vocale (3), qui est lui-même relié à un dictionnaire (12), au superviseur de reconnaissance (6) et à un dispositif de reconnaissance de syntaxe (7), ce dernier étant relié à un dispositif de mémorisation de dialogues (8), qui est relié au superviseur (6).

6. Système selon la revendication 5, caractérisé en ce qu'il est relié à une interface de carte à mémoire (14), coopérant avec des cartes à mémoire (15) de personnalisation dans chacune desquelles sont mémorisés des paramètres relatifs au locuteur correspondant.

7. Système selon la revendication 5 ou 6, caractérisé par le fait que le dispositif de reconnaissance vocale (3) est un dispositif de paramétrisation de signal et de reconnaissance de formes.

8. Système selon l'une des revendications 5 à 7, caractérisé par le fait que le dispositif décodeur acoustico-phonétique est un dispositif d'analyse à bancs de filtres.

## Patentansprüche

1. Verfahren zur Spracherkennung in einer schwierigen Umgebung, dadurch gekennzeichnet, daß es darin besteht, eine grobe Erkennung auszuführen, dann nach dem Vergleich mit gespeicherten akustischen Referenzen die N besten erkannten Phrasen zu liefern und aus diesen N besten Phrasen durch Vergleichen mit wahrscheinlichen Dialogmodellen und durch Ausführen einer akusto-phonetischen Decodierung parallel zur Groberkennungsparametrisierung des Signals die wahrscheinlichste Phrase auszuwählen.

2. Verfahren nach Anspruch 1, dadurch gekennzeichnet, das die Dialogmodelle in Abhängigkeit vom Einsatzkontext der Erkennung gewählt werden.

3. Verfahren nach Anspruch 2, dadurch gekennzeichnet, daß die Dialogmodelle durch Gewichtung von Syntaxbögen zwischen den Wörtern gewählt werden, wobei die Gewichtung außer dem Umgebungsrauschen wenigstens einen der folgenden Faktoren berücksichtigt: den Zustand von Sensoren für physikalische Größen bezüglich der Umgebungsbedingungen, die Historie der Dialoge, den Inhalt eines Wörterbuchs akustischer Referenzen, die Modellierung des Dialogs und der Aufgabe, auf die sich die Dialoge beziehen, und die akusto-phonetische Decodierung, die in Abhängigkeit von phonetischen Kriterien eine erste Zurückweisung der bereits erkannten verschiedenen Phrasen bewirkt.

4. Verfahren nach Anspruch 3, das auf ein Kampfflugzeug angewendet wird, dadurch gekennzeichnet, daß die auf die Umgebungsbedingungen bezogenen physikalischen Größen die Eigenschaften des Navigationssystems und des Waffensystems des Flugzeugs sowie den Zustand der Sensoren des Flugzeugs wie etwa seine Trägheitszentrale und seinen Lastfaktor umfassen.

5. System zur Sprachsteuerung in schwieriger Umgebung, dadurch gekennzeichnet, daß es für die Ausführung des Verfahrens nach Anspruch 1 ausgelegt ist und hierzu eine Erfassungsvorrichtung (5) enthält, die mit einer akusto-phonetischen Decodiervorrichtung (11), die ihrerseits mit einer Erkennungsüberwachungsvorrichtung (6) verbunden ist, und mit einer Spracherkennungsvorrichtung (3) verbunden ist, die ihrerseits mit einem Wörterbuch (12), mit dem Erkennungsüberwacher (6) und mit einer Syntaxerkennungsvorrichtung (7) verbunden ist, wobei diese letztere mit einer Dialogspeichervorrichtung (8) verbunden ist, die mit dem Überwacher (6) verbunden ist.

6. System nach Anspruch 5, dadurch gekennzeichnet, daß es mit einer Speicherkarten-Schnittstelle (14) verbunden ist, die mit Personalisierungsspeicherkarten (15) zusammenwirkt, wovon in jeder die auf den entsprechenden Sprecher bezogenen Parameter gespeichert sind.

7. System nach Anspruch 5 oder 6, dadurch gekennzeichnet, daß die Spracherkennungsvorrichtung (3) eine Vorrichtung zur Signalparametrisierung und zur Formenerkennung ist.

8. System nach einem der Ansprüche 5 bis 7, dadurch gekennzeichnet, daß die akusto-phonetische Decodiervorrichtung eine Filterbank-Analysevorrichtung ist.

## Claims

1. Process of voice recognition in a harsh environment, characterized in that it consists in performing a coarse recognition, then after comparing with stored acoustic references, in supplying the N best phrases recognized, in choosing from these N best phrases, by comparing them with models of probable dialogues and by performing in parallel with the parametrization/coarse recognition of the signal, an acoustico-phonetic decoding, the most likely phrase.

2. Process according to Claim 1, characterized in that the models of dialogue are selected on the basis of the operational context of the recognition.

3. Process according to Claim 2, characterized in that the models of dialogue are selected by weighting the syntax arcs between the words, the weighting taking into account, apart from the environmental noise, one at least of the following factors: the state of sensors of physical quantities relating to the surrounding conditions, the history of the dialogues, the content of a dictionary of acoustic references, the modelling of the dialogue and of the task to which the dialogues relate, the acoustico-phonetic decoding which carries out a first rejection on the basis of phonetic criteria, the various phrases already recognized.

4. Process according to Claim 3, applied to a fighter aircraft, characterized in that the physical quantities relating to the surrounding conditions comprise the characteristics of the aircraft's navigation and weapons system, and the state of the aircraft's sensors such as its inertial rig and its load factor.

5. System for voice command in a harsh environment, characterized in that it is arranged for implementing the process according to Claim 1 and includes for this purpose an acquisition device (5) linked to an acoustico-phonetic decoding device (11), itself linked to a recognition supervision device (6), as well as to a voice recognition device (3), which is itself linked to a dictionary (12), to the recognition supervisor (6) and to a syntax recognition device (7), the latter being linked to a dialogue storage device (8), which is linked to the supervisor (6).

6. System according to Claim 5, characterized in that it is linked to a memory card interface (14), cooperating with customization memory cards (15) in each of which are stored parameters relating to the corresponding speaker.

7. System according to Claim 5 or 6, characterized in that the voice recognition device (3) is a pattern recognition and signal parametrization device.

8. System according to one of Claims 5 to 7, characterized in that the acoustico-phonetic decoder device is an analysis device having banks of filters.
